(19) **Europäisches Patentamt European Patent Office Office européen des brevets**

(11) **EP 3 326 305 B1**

(12) **FASCICULE DE BREVET EUROPEEN**

(45) Date de publication et mention
de la délivrance du brevet:
**03.07.2019 Bulletin 2019/27**

(21) Numéro de dépôt: **16744340.7**

(22) Date de dépôt: **18.07.2016**

(51) Int Cl.:
*H04B 10/116* *(2013.01)*  *H04L 29/12* *(2006.01)*
*H04W 4/80* *(2018.01)*  *H04W 4/00* *(2018.01)*
*H04L 29/08* *(2006.01)*

(86) Numéro de dépôt international:
**PCT/EP2016/067081**

(87) Numéro de publication internationale:
**WO 2017/013078 (26.01.2017 Gazette 2017/04)**

(54) **PROCEDE D'IDENTIFICATION D'UN APPAREIL SUSCEPTIBLE DE COMMUNIQUER PAR LI-FI**

VERFAHREN ZUR IDENTIFIZIERUNG EINER VORRICHTUNG ZUR KOMMUNIKATION DURCH LI-FI

METHOD FOR IDENTIFYING A DEVICE CAPABLE OF COMMUNICATING BY LI-FI

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.07.2015 FR 1557029**

(43) Date de publication de la demande:
**30.05.2018 Bulletin 2018/22**

(73) Titulaire: **Oledcomm**
**78140 Velizy Villacoublay (FR)**

(72) Inventeur: **TOPSU, Suat**
**78000 Versailles (FR)**

(74) Mandataire: **Lavaud, Thomas et al**
**Cabinet Boettcher**
**16, rue Médéric**
**75017 Paris (FR)**

(56) Documents cités:
**WO-A1-2014/085124    WO-A1-2014/085128**
**FR-A1- 3 014 619**

**Description**

L'invention concerne le domaine de l'identification des appareils susceptibles de communiquer par Li-Fi.

ARRIERE PLAN DE L'INVENTION

L'utilisation de la technologie Li-Fi (pour « Light Fidelity ») pour mettre en oeuvre une communication sans fil présente de nombreux avantages : disponibilité du spectre optique, absence d'interférences électromagnétiques, coût, etc.

De plus, grâce notamment au développement de diodes électroluminescentes (LED) présentant des capacités de commutations très importantes et de photodiodes présentant des temps de réponse très élevés, on peut transmettre et recevoir avec le Li-Fi des données avec un débit nettement plus important que le débit offert par exemple par la technologie WiFi (pour « Wireless Fidelity »).

La technologie Li-Fi est ainsi parfaitement adaptée pour transmettre et recevoir de la musique, des vidéos, des données internet, des données de mesure (température, luminosité, etc.), des alarmes (incendie, présence de vapeurs toxiques, etc.), pour connecter en réseau des capteurs ou d'autres types d'appareils, pour géolocaliser en intérieur un appareil en exploitant des signaux Li-Fi émis par des lampes à LED, etc.

De nombreuses applications requièrent de générer et d'assigner à des appareils électroniques susceptibles de communiquer par Li-Fi un identifiant individuel unique de type adresse MAC (pour Media Access Control). Il est par exemple nécessaire d'assigner un tel identifiant à des appareils interconnectés dans un réseau et communiquant entre eux par Li-Fi.

Le document WO 2014/085124 A1 divulgue un système de communication par lumière visible (VLC).

OBJET DE L'INVENTION

L'invention a pour but de générer et d'assigner de manière simple et à un nombre potentiellement important d'appareils électroniques susceptibles de communiquer par Li-Fi une adresse MAC unique et individuelle.

RESUME DE L'INVENTION

En vue de la réalisation de ce but, on propose un procédé d'identification d'un appareil susceptible de communiquer par Li-Fi, le procédé comportant les étapes de :

- générer et stocker une liste de premières données d'adresse et une liste de fréquences de transmissions associées chacune à une première donnée d'adresse ;
- sélectionner des deuxièmes données d'adresse parmi les premières données d'adresse pour former une adresse de type adresse MAC ;
- transformer chaque deuxième donnée d'adresse en une troisième donnée d'adresse contenant la valeur de la fréquence de transmission associée à la deuxième donnée d'adresse ;
- générer à partir des troisièmes données d'adresse une adresse globale ;
- assigner l'adresse globale à l'appareil susceptible de communiquer par Li-Fi ;
- enregistrer l'adresse globale dans un module de mémoire de l'appareil susceptible de communiquer par Li-Fi.

Le procédé de l'invention est simple à mettre en oeuvre puisqu'il suffit, pour assigner l'adresse de type adresse MAC à l'appareil susceptible de communiquer par Li-Fi, de lui transmettre le signal d'adresse global.

De plus, la sélection d'un certain nombre de deuxièmes données d'adresse dans une liste de premières données d'adresse permet d'obtenir de manière simple un nombre très important de combinaisons individuelles, uniques et différentes de deuxièmes données d'adresse et donc d'adresses de type adresse MAC.

BREVE DESCRIPTION DES DESSINS

L'invention sera mieux comprise à la lumière de la description qui suit en référence aux figures des dessins annexés parmi lesquelles :

- la figure 1 représente une lampe à LED utilisée pour communiquer des informations à un téléphone mobile d'un visiteur d'un musée, la lampe à LED possédant une adresse MAC générée et assignée grâce au procédé de l'invention ;
- la figure 2 représente une adresse MAC générée par le procédé de l'invention ;

- la figure 3 représente un signal d'adresse global correspondant à l'adresse MAC de la figure 2 ;
- la figure 4 est un diagramme schématisant le fonctionnement du procédé de l'invention.

## DESCRIPTION DETAILLEE DE L'INVENTION

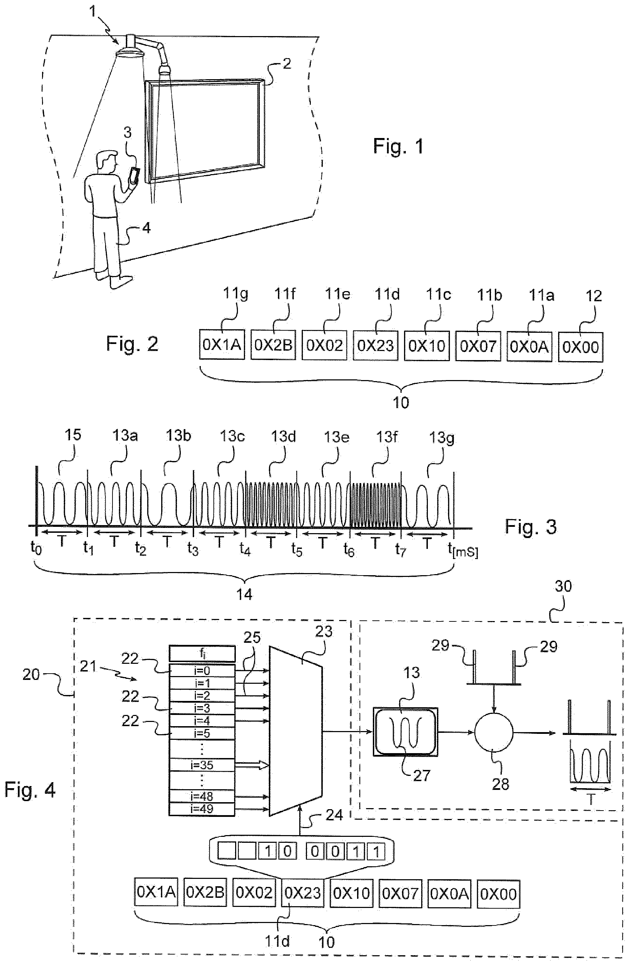

En référence à la figure 1, le procédé de l'invention est ici utilisé pour identifier une lampe à LED 1. L'identification de la lampe à LED 1 consiste ici à générer une adresse MAC, à assigner l'adresse MAC à la lampe à LED 1 au moment de sa fabrication, la lampe à LED 1 étant ensuite en mesure de transmettre cette adresse MAC à un autre appareil (par exemple sur requête de l'autre appareil, ou bien en émettant l'adresse MAC de manière continue jusqu'à recevoir une requête). L'autre appareil est ici un téléphone mobile 3.

La lampe à LED 1 est fixée au plafond d'une pièce d'un musée et est située au-dessus d'un tableau 2 accroché à un mur de la pièce du musée.

La lampe à LED 1 comporte une pluralité de diodes électroluminescentes grâce auxquelles elle éclaire l'environnement du tableau, et un circuit électronique 30 comprenant une pluralité de composants dont certains seront évoqués dans la suite de cette description.

La lampe à LED 1 est intégrée dans un réseau comprenant des appareils électroniques interconnectés et susceptibles de communiquer entre eux par Li-Fi. Parmi les appareils électroniques interconnectés, on trouve notamment plusieurs lampes à LED telles que la lampe à LED 1, ainsi que le téléphone mobile 3 dont est muni un visiteur 4 du musée présent dans la pièce à proximité du tableau 2.

Outre l'éclairage de l'environnement du tableau 2, la lampe à LED 1 est impliquée dans la mise en oeuvre de deux fonctions.

La lampe à LED 1 réalise ainsi une fonction d'information, qui consiste à transmettre par Li-Fi au téléphone mobile 3 du visiteur 4 un certain nombre de données culturelles relatives au tableau 2 (époque, peintre, style, etc.). Les données culturelles sont ainsi rendues accessibles au visiteur 4 via le téléphone mobile 3.

La lampe à LED 1 est aussi utilisée dans une fonction de géolocalisation du téléphone mobile 3. La lampe à LED 1 émet par Li-Fi des données relatives à la position de la lampe à LED 1 à destination du téléphone mobile 3 qui sont utilisées par le téléphone mobile 3 pour déterminer la position du téléphone mobile 3. La position du téléphone mobile 3 est ainsi rendue accessible au visiteur 4 via le téléphone mobile 3.

Les fonctions d'information et de géolocalisation et, de manière plus générale, l'intégration de la lampe à LED 1 dans le réseau d'appareils électroniques interconnectés et susceptibles de communiquer entre eux par Li-Fi précédemment évoqué, nécessitent de générer et d'assigner à la lampe à LED 1 au moment de sa fabrication une adresse MAC unique et individuelle, propre à la lampe à LED 1, et nécessitent que la lampe à LED 1 transmette l'adresse MAC au téléphone mobile 3.

On note bien sûr que chaque lampe à LED du réseau, et, au-delà même du réseau et de l'application évoquée ici, chaque lampe à LED similaire dans le monde doit posséder une telle adresse MAC unique et individuelle, ce qui, potentiellement, peut représenter un nombre d'adresses MAC uniques et individuelles à générer très important.

On utilise le procédé de l'invention pour générer ces adresses MAC et pour assigner chaque adresse MAC à une lampe à LED telle que la lampe à LED 1.

Une adresse MAC 10 est ici formée d'une chaîne de huit octets dont un octet d'initialisation.

Pour générer l'adresse MAC, on génère tout d'abord une liste de premières données d'adresse et une liste de fréquences de transmission associées chacune à une première donnée d'adresse.

Chaque première donnée d'adresse est constituée d'un octet. La liste de premières données d'adresse comporte ici cinquante premières données d'adresse.

La liste de premières données d'adresse et la liste de fréquences de transmission sont stockées et associées de manière à ce que chaque fréquence de transmission ait pour référence la première donnée d'adresse qui lui est associée.

Ainsi :

- la première donnée d'adresse 0000 0000 est associée à la fréquence de transmission $f_0$ ;
- la première donnée d'adresse 0000 0001 est associée à la fréquence de transmission $f_1$ ;
- la première donnée d'adresse 0000 0010 est associée à la fréquence de transmission $f_2$ ;
- la première donnée d'adresse 0000 0011 est associée à la fréquence de transmission $f_3$ ;
  - ...
- la première donnée d'adresse 0010 0011 est associée à la fréquence de transmission $f_{35}$ ;
  - ...
- la première donnée d'adresse 0011 0001 est associée à la fréquence de transmission $f_{49}$.

On note que seuls six bits sur les huit bits formant un octet d'une première adresse sont ici utilisés, car six bits suffisent pour former un nombre suffisant de fréquences distinctes.

Les fréquences de transmission $f_0$ à $f_{49}$ sont obtenues par incrémentation d'un pas de fréquence de 300 Hz à partir de la fréquence de 1,5 kHz, c'est-à-dire que :

- $f_0$ = 1,5 kHz ;
- $f_1$ = 1,8 kHz ;
- $f_2$ = 2,1 kHz ;
- $f_3$ = 2,4 kHz ;
  - ...
- $f_{35}$ = 12 kHz ;
- $f_{49}$ = 15,6 kHz.

On sélectionne ensuite sept deuxièmes données d'adresse parmi les cinquante premières données d'adresse, auxquelles on ajoute l'octet de démarrage pour former une adresse MAC. On peut ainsi obtenir

$$50! \ / \ (50-7)! = 503 \ 417 \ 376 \ 000$$

arrangements possibles sans répétition, soit le même nombre d'adresses MAC individuelles uniques.

Ainsi, l'adresse MAC 10 visible sur la figure 2 comporte sept deuxièmes données d'adresse 11a, 11b, 11c, 11d, 11e, 11f, 11g et un octet de démarrage 12. Les deuxièmes données d'adresse 11 sont exprimées en hexadécimal sur la figure 2 :

- la deuxième donnée d'adresse 11a a pour valeur 0X0A en hexadécimal, soit 10 en décimal ;
- la deuxième donnée d'adresse 11b a pour valeur 0X07 en hexadécimal, soit 7 en décimal ;
- la deuxième donnée d'adresse 11c a pour valeur 0X10 en hexadécimal, soit 16 en décimal ;
- la deuxième donnée d'adresse 11d a pour valeur 0X23 en hexadécimal, soit 35 en décimal ;
- la deuxième donnée d'adresse 11e a pour valeur 0X02 en hexadécimal, soit 2 en décimal ;
- la deuxième donnée d'adresse 11f a pour valeur 0X2B en hexadécimal, soit 43 en décimal ;
- la deuxième donnée d'adresse 11g a pour valeur 0X1A en hexadécimal, soit 26 en décimal.

Une fois que l'adresse MAC 10 à destination de la lampe à LED 1 est formée, on transforme chaque deuxième donnée d'adresse 11a, 11b, 11c, 11d, 11e, 11f, 11g en une troisième donnée d'adresse contenant la valeur de fréquence de transmission associée à la deuxième donnée d'adresse. Ainsi, la deuxième donnée d'adresse 11d, qui correspond à la première donnée d'adresse associée à la fréquence $f_{35}$ = 12 kHz, est transformée en une troisième donnée d'adresse contenant la valeur « 12 kHz » sous forme binaire.

On génère ensuite à partir des troisièmes données d'adresse une adresse globale qui comporte une donnée de démarrage correspondant à l'octet de démarrage 12 et contenant la valeur de la fréquence $f_0$, et une chaîne constituée par la succession des troisièmes données d'adresse.

L'adresse globale est ensuite transmise au circuit électronique de la lampe à LED 1. Le circuit électronique acquiert l'adresse globale (et donc l'adresse MAC 10) et enregistre l'adresse globale dans et l'adresse MAC 10 dans un module mémoire du circuit électronique par une méthode du type « Burned-in adress ». L'adresse MAC 10 devient par la suite un identifiant unique et individuel assigné à la lampe à LED 1. On note ici que l'adresse globale peut être transmise à la lampe à LED 1 par une transmission filaire, par Li-Fi, etc.

En référence à la figure 4, on utilise un dispositif de génération et d'assignation d'adresse MAC 20 pour générer l'adresse MAC 10 et pour assigner l'adresse MAC 10 à la lampe à LED 1.

Le dispositif de génération et d'assignation d'adresse MAC 20 comporte tout d'abord des moyens de stockage pour générer et stocker la liste des premières données d'adresse et la liste des fréquences de transmission associées, et des moyens de sélection pour sélectionner les deuxièmes données d'adresse 11 parmi les premières données d'adresse de manière à former l'adresse MAC 10 .

Les moyens de stockage comprennent une table de correspondance 21 (ou Look-Up Table) dans laquelle est stockée la liste des cinquante premières données d'adresse ainsi que les fréquences de transmission $f_i$ associées. Dans la table de correspondance 21, les fréquences de transmission $f_i$ sont chacune stockées dans un espace mémoire 22 dont la référence (ou l'adresse) au sein de la table de correspondance 21 est la première donnée d'adresse à laquelle la fréquence de transmission $f_i$ est associée.

Les moyens de sélection comprennent un multiplexeur 23 et un sélecteur 24 commandant le multiplexeur 23.

Chaque espace mémoire 22 contenant une fréquence de transmission $f_i$ est relié par un lien de connexion 25 aux entrées du multiplexeur 23.

Lorsqu'une deuxième donnée d'adresse 11 est sélectionnée parmi les cinquante premières données d'adresse, le sélecteur 24 connecte à la sortie du multiplexeur 23 l'entrée du multiplexeur 23 reliée à l'espace mémoire 22 ayant pour référence la deuxième donnée d'adresse 11 et contenant la fréquence de transmission $f_i$ associée à la deuxième donnée d'adresse 11. Ainsi, sur la figure 4, on illustre un cas où la deuxième donnée d'adresse 11d correspondant à la première donnée d'adresse associée à la fréquence $f_{35}$ = 12 kHz est sélectionnée.

On décrit maintenant la transmission par la lampe à LED 1 de son adresse MAC 10 au téléphone mobile 3.

Chaque troisième donnée d'adresse est transformée en un signal d'adresse partiel 13a, 13b, 13c, 13d, 13e, 13f, 13g de durée prédéterminée T ayant pour fréquence la fréquence de transmission contenu dans la troisième donnée d'adresse (et associée à la deuxième donnée d'adresse 11a, 11b, 11c, 11d, 11e, 11f, 11g).

Ainsi, la deuxième donnée d'adresse 11d correspond à la première donnée d'adresse associée à la fréquence $f_{35}$ = 12 kHz. La troisième donnée d'adresse associée à la deuxième donnée d'adresse 11d contient donc la valeur de la fréquence $f_{35}$ = 12 kHz. Le signal d'adresse partiel 13d en fonction du temps t est donc le suivant :

-    $s(t) = A \cos(2.\pi .f_{35}.t + \varphi)$ pour $0 \leq t \leq T$ ;
-    $s(t) = 0$ sinon,

avec $f_{35}$ = 12 kHz, la phase $\varphi$ étant comprise ici entre 0 et 90° et A étant l'amplitude du signal.

On génère à partir des sept signaux d'adresse partiels 13 un signal d'adresse global 14 comportant un signal de démarrage 15 et une chaîne constituée par la succession des sept signaux d'adresse partiels 13. Le signal de démarrage 15 qui correspond à l'octet de démarrage 12 est un signal de durée T et de fréquence $f_0$.

Pour transmettre le signal d'adresse global au téléphone mobile 3, le circuit électronique 30 de la lampe à LED comporte un générateur de fréquence 27 et une unité de synchronisation 28 (visibles sur la figure 4).

Le générateur de fréquence 27 génère les sept signaux d'adresse partiels 13 et le signal de démarrage 15 pour former le signal d'adresse global 14. L'unité de synchronisation 28 utilise, pour chaque signal d'adresse partiel 13, une impulsion 29 provenant d'un signal généré par une horloge. L'unité de synchronisation 28 synchronise le début et la fin de la génération du signal d'adresse partiel 13 sur ces impulsions 29, de sorte que le signal d'adresse partiel 13 est généré sur une durée prédéterminée T.

Le signal d'adresse global 14 est transmis par Li-Fi au téléphone mobile 3 via un signal de transmission Li-Fi. Le signal de transmission Li-Fi est formé par une succession de signaux générés par clignotement d'une diode électroluminescente aux fréquences correspondant aux fréquences des signaux d'adresse partiels 13.

Le téléphone mobile 3 est muni d'un récepteur Li-Fi reliée à une photodiode qui détecte le signal de transmission Li-Fi. Le téléphone mobile 3 acquiert le signal d'adresse global 14 et donc l'adresse MAC 10 de la lampe à LED 1.

L'invention n'est pas limitée au mode de réalisation particulier qui vient d'être décrit, mais, bien au contraire, couvre toute variante entrant dans le cadre de l'invention tel que défini par les revendications.

On note tout d'abord que l'invention ne se limite nullement à l'assignation d'adresses de type adresse MAC à des lampes à LED. Les adresses de type adresse MAC générées peuvent être assignées à tout type d'appareil susceptible de communiquer par Li-Fi. Le procédé de l'invention est particulièrement adapté pour assigner une adresse de type adresse MAC à un appareil comportant un module générique de communication Li-Fi destiné à équiper des dispositifs ou appareils électroniques différents susceptibles de communiquer par Li-Fi. En effet, l'adresse de type adresse MAC identifiant un tel appareil comportant un module générique de communication Li-Fi peut parfaitement dépendre de l'application dans laquelle est utilisé l'appareil et ne pas être définie au moment de la fabrication du module générique de communication Li-Fi, mais seulement lors de l'assemblage de l'appareil.

Bien que l'on ait évoqué dans la description une adresse MAC, il est bien évident que l'invention s'applique à tout autre type d'identifiant.

La structure de l'adresse MAC décrite ici est bien sûr fournie uniquement pour illustrer l'invention et peut tout à fait être différente (nombre de premières et deuxièmes données d'adresse, taille de chaque donnée d'adresse, etc.)

De même, les fréquences de transmission, tout comme le pas de fréquence entre les fréquences peuvent être différents des fréquences et du pas de fréquence cités. Les fréquences de transmission peuvent être comprises entre 0 et plusieurs MHz. La limite supérieure dépend de la capacité de l'horloge interne du module électronique de la lampe.

**Revendications**

1.   Procédé d'identification d'un appareil susceptible de communiquer par Li-Fi, Light Fidelity, le procédé **caractérisé en ce qu'**il comporte les étapes de :

       - générer et stocker une liste de premières données d'adresse et une liste de fréquences de transmissions ($f_i$)

associées chacune à une première donnée d'adresse ;
- sélectionner des deuxièmes données d'adresse (11) parmi les premières données d'adresse pour former une adresse de type addresse MAC, Media Access Control, (10) qui identifie l'appareil susceptible de communiquer par Li-Fi (1) ;
- transformer chaque deuxième donnée d'adresse en une troisième donnée d'adresse contenant la valeur de la fréquence de transmission associée à la deuxième donnée d'adresse ;
- générer à partir des troisièmes données d'adresse une adresse globale ;
- assigner l'adresse globale à l'appareil susceptible de communiquer par Li-Fi ;
- enregistrer l'adresse globale dans un module de mémoire de l'appareil susceptible de communiquer par Li-Fi (1).

2. Procédé selon la revendication 1, dans lequel l'adresse globale comporte une donnée de démarrage et une chaîne constituée par la succession des troisièmes données d'adresse.

3. Procédé selon la revendication 2, dans lequel la chaîne comporte sept troisièmes données d'adresse.

4. Procédé selon l'une des revendications précédentes, dans lequel chaque première donnée d'adresse comporte un mot d'un octet.

5. Procédé selon l'une des revendications précédentes, dans lequel les fréquences de transmission sont comprises entre 0 Hz et plusieurs MHz.

6. Procédé selon l'une des revendications précédentes, dans lequel on utilise une table de correspondance (21) pour stocker la liste de premières données d'adresse associées chacune à une fréquence de transmission.

7. Procédé selon l'une des revendications précédentes, dans lequel on utilise un multiplexeur (23) pour sélectionner les deuxièmes données d'adresse.

8. Procédé selon l'une des revendications précédentes, dans lequel l'assignation de l'adresse globale (14) à l'appareil susceptible de communiquer par Li-Fi est réalisée en transmettant par Li-Fi l'adresse globale (14) à l'appareil susceptible de communiquer par Li-Fi.

9. Procédé selon l'une des revendications précédentes, comportant en outre une étape au cours de laquelle l'appareil susceptible de communiquer par Li-Fi (1) transforme chaque troisième donnée d'adresse en un signal d'adresse partielle (13) de durée prédéterminée (T) ayant pour fréquence la fréquence de transmission contenue dans la troisième donnée d'adresse, une étape au cours de laquelle l'appareil susceptible de communiquer par Li-Fi (1) génère un signal d'adresse global (14) comportant une chaîne constituée par la succession des signaux d'adresse partiel (13), et transmet par Li-Fi à un autre appareil (3) le signal d'adresse global (14) de manière à ce que l'autre appareil acquiert l'adresse de type adresse MAC (10).

**Patentansprüche**

1. Verfahren zum Identifizieren einer Vorrichtung, die geeignet ist, mittels Li-Fi, Light Fidelity, zu kommunizieren, wobei das Verfahren **dadurch gekennzeichnet ist, dass** es die Schritte umfasst:

- Erzeugen und Speichern einer Liste von ersten Adressdaten und einer Liste von Übertragungsfrequenzen ($f_i$), die jeweils mit einem ersten Adressdatenelement verknüpft sind;
- Auswählen von zweiten Adressdaten (11) unter den ersten Adressdaten, um eine Adresse vom Typ MAC-Adresse, Media Access Control, (10) zu bilden, welche die Vorrichtung, die geeignet ist, mittels Li-Fi (1) zu kommunizieren, identifiziert;
- Umwandeln jedes zweiten Adressdatenelements in ein drittes Adressdatenelement, das den Wert der Übertragungsfrequenz enthält, die mit dem zweiten Adressdatenelement verknüpft ist;
- Erzeugen anhand der dritten Adressdaten einer globalen Adresse;
- Zuweisen der globalen Adresse zu der Vorrichtung, die geeignet ist, mittels Li-Fi zu kommunizieren;
- Speichern der globalen Adresse in einem Speichermodul der Vorrichtung (1), die geeignet ist, mittels Li-Fi zu kommunizieren.

**2.** Verfahren nach Anspruch 1, bei dem die globale Adresse eine Startadresse und eine Kette umfasst, die aus der Abfolge der dritten Adressdaten gebildet ist.

**3.** Verfahren nach Anspruch 2, bei dem die Kette sieben dritte Adressdaten umfasst.

**4.** Verfahren nach einem der vorhergehenden Ansprüche, bei dem jedes erste Adressdatenelement ein Wort aus einem Byte umfasst.

**5.** Verfahren nach einem der vorhergehenden Ansprüche, bei dem die Übertragungsfrequenzen zwischen 0 Hz und mehreren MHz liegen.

**6.** Verfahren nach einem der vorhergehenden Ansprüche, bei dem man eine Entsprechungstabelle (21) verwendet, um die Liste von ersten Adressdaten, die jeweils mit einer Übertragungsfrequenz verknüpft sind, zu speichern.

**7.** Verfahren nach einem der vorhergehenden Ansprüche, bei dem man einen Multiplexer (23) verwendet, um die zweiten Adressdaten auszuwählen.

**8.** Verfahren nach einem der vorhergehenden Ansprüche, bei dem die Zuordnung der globalen Adresse (14) zu der Vorrichtung, die geeignet ist, mittels Li-Fi zu kommunizieren, dadurch erfolgt, dass mittels Li-Fi die globale Adresse (14) zu der Vorrichtung übertragen wird, die geeignet ist, mittels Li-Fi zu kommunizieren.

**9.** Verfahren nach einem der vorhergehenden Ansprüche, ferner umfassend einen Schritt, während dessen die Vorrichtung, die geeignet ist, mittels Li-Fi zu kommunizieren, jedes dritte Adressdatenelement in ein Teiladresssignal (13) mit vorbestimmter Dauer (T) umwandelt, das als Frequenz die Übertragungsfrequenz hat, die in dem dritten Adressdatenelement enthalten ist, einen Schritt, während dessen die Vorrichtung, die geeignet ist, mittels Li-Fi zu kommunizieren, ein globales Adresssignal (14) erzeugt, das eine Kette umfasst, die aus der Abfolge der Teiladresssignale (13) gebildet ist, und mittels Li-Fi das globale Adresssignal (14) an eine andere Vorrichtung (3) überträgt, derart, dass die andere Vorrichtung die Adresse vom Typ MAC-Adresse (10) erhält.

**Claims**

**1.** A method for identifying a device capable of communicating by Li-Fi, Light Fidelity, the method being **characterized in that** the method comprises the steps of:

- generating and storing a list of first address data and a list of transmission frequencies ($f_i$), each associated with a first address datum;
- selecting second address data (11) from the first address data to form an address of the MAC address type, Media Access Control (10), identifying the device capable of communicating by Li-Fi ;
- transforming each second address datum into a third address datum containing the value of the transmission frequency associated with the second address datum;
- generating a global address from the third address data;
- assigning the global address to the device capable of communicating by Li-Fi;
- recording the global address in a memory module of the device capable of communicating by Li-Fi (1).

**2.** The method as claimed in claim 1, in which the global address comprises a start datum and a sequence made up of the succession of the third address data.

**3.** The method as claimed in claim 2, in which the sequence comprises seven third address data.

**4.** The method as claimed in one of the preceding claims, in which each first address datum comprises a one-byte word.

**5.** The method as claimed in one of the preceding claims, in which the transmission frequencies are between 0 Hz and several MHz.

**6.** The method as claimed in one of the preceding claims, in which a correspondence table (21) is used to store the list of first address data, each associated with a transmission frequency.

7. The method as claimed in one of the preceding claims, in which a multiplexer (23) is used to select the second address data.

8. The method as claimed in one of the preceding claims, in which the assignment of the global address (14) to the device capable of communicating by Li-Fi is implemented by transmitting the global address (14) by Li-Fi to the device capable of communicating by Li-Fi.

9. The method as claimed in one of the preceding claims, furthermore comprising a step during which the device capable of communicating by Li-Fi (1) transforms each third address datum into a partial address signal (13) of a predetermined duration (T) having as its frequency the transmission frequency contained in the third datum, a step during which the device capable of communicating by Li-Fi (1) generates a global address signal (14) comprising a sequence made up the succession of the partial address signals (13), and transmits the global address signal (14) by Li-Fi to another device (3) in such a way that the other device acquires the address of the MAC address type (10) .

Fig. 1

Fig. 2

| 11g | 11f | 11e | 11d | 11c | 11b | 11a | 12 |
|-----|-----|-----|-----|-----|-----|-----|-----|
| 0X1A | 0X2B | 0X02 | 0X23 | 0X10 | 0X07 | 0X0A | 0X00 |

10

Fig. 3

15  13a  13b  13c  13d  13e  13f  13g

$t_0$  T  $t_1$  T  $t_2$  T  $t_3$  T  $t_4$  T  $t_5$  T  $t_6$  T  $t_7$  T  $t_{[mS]}$

14

Fig. 4

30

20

21

22

$f_i$

25

23

29  29

13

i=0
i=1
i=2
i=3
i=4
i=5
...
i=35
...
i=48
i=49

27

28

T

24

| | | 1 | 0 | 0 | 0 | 1 | 1 |

| 0X1A | 0X2B | 0X02 | 0X23 | 0X10 | 0X07 | 0X0A | 0X00 |

11d  10

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2014085124 A1